# EUROPÄISCHE PATENTANMELDUNG

(11) **EP 0 887 906 A1**
(43) Veröffentlichungstag der Anmeldung: **30.12.1998**
(21) Anmeldenummer: 98108394.2
(22) Anmeldetag: 08.05.1998
(51) Int. Cl.: H02K 3/14

(54) **Elektrische maschine mit stabförmigen Kupferleitern**

(30) Priorität: 23.06.1997 DE 19726563
(71) Anmelder: ABB PATENT GmbH, 68309 Mannheim (DE)
(72) Erfinder: Runck, Werner, Dr., 67098 Bad Dürkheim (DE)
(74) Vertreter: Rupprecht, Klaus, Dipl.-Ing.

(57) **Zusammenfassung**

Die Erfindung betrifft eine elektrische Maschine, insbesondere Generator für große Leistung, zum Beispiel Turbogenerator mit einer Statorwicklung, die aus stabförmigen Kupferleitern (13, 15) gebildet ist, welche in achsparallelen Nuten als Ober- und Unterstäbe eingelegt sind und endseitig im Wickelkopf jeweils mit Kupferösen (20) miteinander verbunden sind, wobei zumindest in einzelnen Abschnitten der Statorwicklung jeder einzelne Teilstab (13 l bzw. 13 r) der Oberlage mit dem entsprechenden Teilstab (15 l bzw. 15 r) der Unterlage jeweils mit einer nur diesem Teilstab zugeordneten Öse (20) verlötet ist, und somit die Wicklungsverbindung herstellt.

## Beschreibung

Die Erfindung betrifft eine elektrische Maschine, insbesondere einen Generator für große Leistung, zum Beispiel Turbogenerator, mit einer Statorwicklung mit zweilagig als Ober- und Unterstab stabförmig ausgebildeten Kupferleitern zur Stromführung, welche endseitig jeweils mittels Kupferösen miteinander verbunden sind.

Bei größeren Turbogeneratoren ist es allgemein bekannt, daß die Statorwicklung durch stabförmige Kupferleiter gebildet ist, die aus einer Vielzahl von einander elektrisch isolierten Teilleitern bestehen.

Um die bei den hohen Leistungen vielfach durch die hohe Stromdichte hervorgerufene Verlustwärme, besonders im Wickelkopf, abzuführen, um die Wicklung vor thermischen Schäden zu bewahren, müssen die Leiter vom Kühlmedium ausreichend gut umströmt sein.

Häufig ist die Statorwicklung, insbesondere bei diesen indirekt gekühlten großen Turbogeneratoren zweilagig mit jeweils radial hintereinander angeordneten Ober- und Unterstäben ausgestattet, bei der die Verlustwärme der Wicklung im Wickelkopf auf indirektem Weg über die Stabisolation an das vorbeiströmende Kühlmedium abgegeben wird.

Die Enden von derartigen Leiterstäben werden üblicherweise in bekannter Art mittels sogenannter Lötösen miteinander verbunden. Anfang und Ende der durch die Stäbe gebildeten Spule bilden einen elektrischen Anschluß.

Diese Endpartie ist mit einer faserverstärkten Kunststoffkachel abgedeckt, wobei die Spalte zwischen den Teilleitern und der Kachel mit einem Kitt ausgefüllt sind.

Es ist eine Kühlung dieser Endpartien erforderlich, um die durch die Verluste an den Leiterenden im Wickelkopf bedingte Erwärmung der Ösen zu begrenzen.

Infolge der zusätzlichen Stromverdrängungsverluste in den Ösen sowie begünstigt durch die geringe Wärmeleitfähigkeit der Kunststoffkachel verbunden mit geringen Kühlmittelgeschwindigkeiten an den Lötösen ist deren Stromtragfähigkeit begrenzt, um unzulässig hohe Temperaturen zu vermeiden.

Ausgehend von diesem Stand der Technik ist es Aufgabe der Erfindung eine Lötöse zur Verbindung der Teilleiter vorzusehen, welche die hohe Wärmebelastung vermeidet.

Diese Aufgabe wird erfindungsgemäß durch die kennzeichnenden Merkmale des Patentanspruchs 1 gelöst. Weitere vorteilhafte Ausgestaltungen sind in den Unteransprüchen behandelt.

Gemäß der Erfindung ist daher vorgesehen, daß jeder einzelne Teilstab, aus denen der gesamte Stab besteht, mit einer, nur diesem Teilstab zugeordneten, Öse verlötet ist, welche sämtliche Teilleiter des Teilstabes umschließt.

Diese Maßnahme hat mehrerlei Vorteile zur Folge. Zum einen sind wegen der geringeren geometrischen Abmessungen einer einem Teilstab zugeordneten Lötöse die Stromverdrängungsverluste geringer als bei der herkömmlichen Ausführung, so daß auch die hierdurch bedingte Erwärmung niedriger ist.

Darüberhinaus ist aber auch die zur Wärmeabgabe bereitstehende Oberfläche größer, so daß auch hierdurch das bei einer bestimmten Strombelastung erreichte Temperaturniveau niedriger liegt als bei herkömmlichen Ausführungen der Lötverbindung.

Dies bedeutet aber umgekehrt, daß keine unzulässigen Temperaturen in der Lötöse, das heißt für die betreffende elektrische Maschine auftreten und somit insgesamt die zulässige Strombelastung wesentlich angehoben werden kann, und damit der Wirkungsgrad bei indirekt gekühlten Generatoren verbessert wird.

Hieraus resultiert ferner, daß es nunmehr auch möglich ist, große Turbogeneratoren für relativ kleine Spannungen, zum Beispiel 10 kV, mit einer entsprechend hohen Strombelastung der Leiterstäbe auszulegen und sicher zu betreiben.

Ein weiterer mit der Erfindung erreichter Vorteil betrifft die durch magnetische Felder im Wickelkopf verursachten Verluste, die dadurch reduziert werden, daß ein schaltungsmäßiger Wechsel der Teilstäbe in der Mitte der von den Leiterstäben gebildeten Spule durchgeführt wird.

Entsprechend einer vorteilhaften Ausgestaltung der Erfindung umschließt jede Lötöse den zugeordneten Teilstab am Ende und ist geg.falls als elektrischer Spulenanschluß stirnseitig angeordnet.

Vorzugsweise sind die die Anschlußteile entsprechend den zugeordneten Leiterstäben radial hintereinander angeordnet.

Gemäß einer weiteren vorteilhaften Ausgestaltung der Erfindung fließen in den Teilleitern der Teilstäbe durch einen schaltungstechnischen Wechsel die gleichen Teilströme.

Hierdurch läßt sich eine deutliche Verringerung der, durch die im Wickelkopf vorhandenen magnetischen Felder hervorgerufenen, Verluste erreichen. Dabei ist vorteilhafterweise der schaltungstechnische Wechsel der Teilleitersäulen in der Mitte der von den Stäben gebildeten Spule vorgesehen.

In weiterer Ausgestaltung der Erfindung können die Lötösen von zusammengehörigen Teilleiterstäben miteinander verbunden sein, wobei die Lage dieser Verbindung peripher, das heißt am Umfang des Ständers, vorgesehen ist.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: eine herkömmliche Öse zur Verbindung von Oberstab und Unterstab im Querschnitt;
- Fig. 2: die Öse gemäß Fig. 1 in Seitenansicht und
- Fig. 3: einen ausschnittweisen Querschnitt durch einen Wickelkopf mit erfindungsgemäßen Ösen.

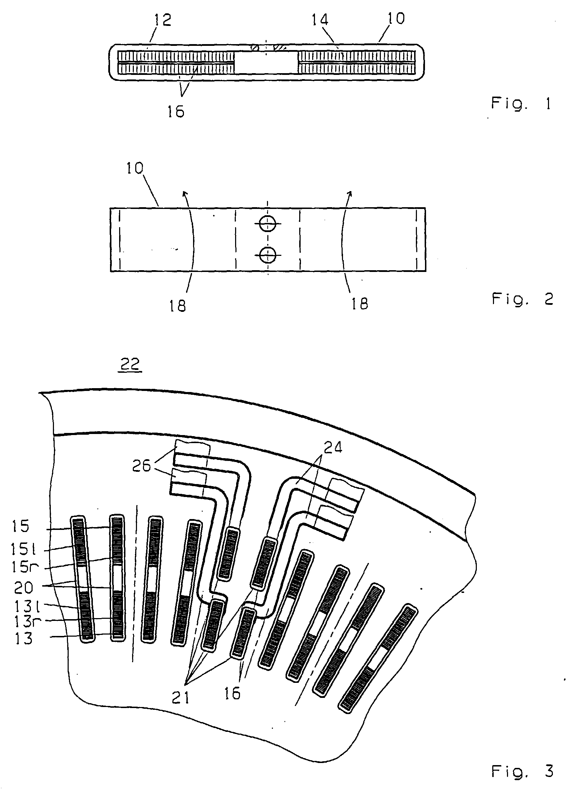

In Fig. 1 ist eine herkömmliche Öse 10 zur Verbindung von Oberstab 12 und Unterstab 14 im Querschnitt, das heißt quer zu den Stäben 12, 14, dargestellt. In Fig. 2 ist die gleiche Öse 10 in Seitenansicht gezeigt.

Anhand der Schnittdarstellung in Fig. 1 ist erkennbar, daß die Öse 10 den Ober- und Unterstabe 12, 14 mit den jeweiligen Teilleitersäulen 16 umschließt und, in festem Abstand zueinander fixiert, das heißt fest an den Stäben anliegend, mit Strom beaufschlagt, der über nicht näher gezeigte Leiter eingespeist wird.

Die herkömmlichen Ösen 10 sind, wie aus der Seitenansicht in Fig. 2 entnehmbar, z.B. als kastenförmige Rohre ausgebildet, welche zu ihrer Kühlung vom Kühlmedium 18 umströmt werden.

In Fig. 3 ist eine ausschnittweise Querschnittsansicht eines Statorwickelkopfes 22 dargestellt, innerhalb welcher eine Anordnung von erfindungsgemäßen Ösen 20 im Querschnitt gezeigt ist. Aus dieser Darstellung ist ersichtlich, daß die erfindungsgemäße Öse 20 jeweils eine Teilleiter-Säule 13 l bzw. 13 r und 15 l bzw. 15 r, umschließt und damit verbindet und somit insgesamt den Oberstab 13 mit dem Unterstab 15.

Weiterhin ist das Stabende für einen Schaltstab gezeigt, wobei die erfindungsgemäßen Ösen 21 jeweils die Teilleitersäulen 16 umschließen, die wiederum mit separaten Leitern 24 zu den zugeordneten Anschlußteilen 26 geführt sind, über welche der Ständerstrom zugeführt wird.

Nicht gezeigt ist der schaltungstechnische Wechsel, z.B. der Teilstäbe 13 l mit 15 r in der Mitte der von den Stäben gebildeten Spule.

## Patentansprüche

1. Elektrische Maschine, insbesondere Generator für große Leistung, zum Beispiel Turbogenerator, mit einer Statorwicklung, die aus stabförmigen Kupferleitern (13, 15) gebildet ist, welche in achsparallelen Nuten als Ober- und Unterstäbe engelegt sind und endseitig im Wickelkopf jeweils mit Kupferösen (20) miteinander verbunden sind, dadurch gekennzeichnet, daß zumindest in einzelnen Abschnitten der Statorwicklung jeder einzelne Teilstab (13 l bwz. 13 r) der Oberlage mit dem entsprechenden Teilstab (15 l bzw. 15 r) der Unterlage jeweils mit einer, nur diesem Teilstab zugeordneten Öse (20) verlötet ist, und somit die Wicklungsverbindung herstellt.

2. Elektrische Maschine nach Anspruch 1, dadurch gekennzeichnet, daß jede Lötöse (21) die zugeordneten Teilleitersäulen (16) am Ende umschließt und über ein daran angeschlossenes Leitungsstück (24) mit einem Anschlußteil (26) der Schaltverbindung geführt ist.

3. Elektrische Maschine nach Anspruch 1 oder 2, dadurch gekennzeichnet, daß die Anschlußteile (26) entsprechend den zugeordneten Teilleitersäulen (16) radial übereinander angeordnet sind.

4. Elektrische Maschine nach einem der vorherigen Ansprüche, dadurch gekennzeichnet, daß die Ober- und Unterstäbe (13, 15) aus Teilleitersäulen (13 l, 13 r, 15 l, 15 r) bestehen, welche schaltungstechnisch wechselweise beaufschlagt sind, so daß sich die durch magnetische Felder im Wickelkopf hervorgerufenen Verluste verringern.

5. Elektrische Maschine nach Anspruch 4, dadurch gekennzeichnet, daß der schaltungstechnische Wechsel in der Mitte der von den Leiterstäben (13, 15) gebildeten Spule vorgesehen ist.

6. Elektrische Maschine nach einem der vorherigen Ansprüche, dadurch gekennzeichnet, daß die Ösen (20) von zusammengehörigen Stäben (13, 15) einer Nut elektrisch miteinander verbunden sind.
